# EUROPÄISCHE PATENTSCHRIFT

(11) **EP 2 887 528 B1**
(45) Veröffentlichungstag und Bekanntmachung des Hinweises auf die Patenterteilung: **29.08.2018**
(21) Anmeldenummer: 13198886.7
(22) Anmeldetag: 20.12.2013
(51) Int. Cl.: H02M 7/483

(54) **Multizellen-Stromrichterschaltung**
Multi-cell power converter circuit
Circuit redresseur de courant multi-cellules

(43) Veröffentlichungstag der Anmeldung: 24.06.2015
(73) Patentinhaber: Siemens Aktiengesellschaft, 80333 München (DE)
(72) Erfinder: Zaiser, Georg, 91056 Erlangen (DE)

(56) Entgegenhaltungen:
- US-A1- 2008 123 374
- US-A1- 2009 021 966
- BALJIT S RIAR ET AL: "Analysis and control of a three-phase Modular Multi-level Converter based on Inductive Power Transfer technology (M2LC-IPT)", INDUSTRIAL TECHNOLOGY (ICIT), 2013 IEEE INTERNATIONAL CONFERENCE ON, IEEE, 25. Februar 2013 (2013-02-25), Seiten 475-480, XP032377145, DOI: 10.1109/ICIT.2013.6505718 ISBN: 978-1-4673-4567-5
- BALJIT SINGH RIAR ET AL: "A Modular Multi-level Converter (M2LC) based on Inductive Power Transfer (IPT) technology", SUSTAINABLE ENERGY TECHNOLOGIES (ICSET), 2012 IEEE THIRD INTERNATIONAL CONFERENCE ON, IEEE, 24. September 2012 (2012-09-24), Seiten 54-59, XP032270755, DOI: 10.1109/ICSET.2012.6357375 ISBN: 978-1-4577-1870-0
- LIANG JIAQI ET AL: "Current source modular multilevel converter for HVDC and FACTS", 2013 15TH EUROPEAN CONFERENCE ON POWER ELECTRONICS AND APPLICATIONS (EPE), IEEE, 2. September 2013 (2013-09-02), Seiten 1-10, XP032505583, DOI: 10.1109/EPE.2013.6634735 [gefunden am 2013-10-16]

## Beschreibung

Die Erfindung betrifft eine Multizellen-Stromrichterschaltung, welche eine Anzahl an Phasensträngen aufweist, wobei der oder jeder Phasenstrang eine Reihenschaltung einer Mehrzahl von Zellen aufweist. Die Erfindung betrifft weiter ein Verfahren zur Steuerung einer solchen Stromrichterschaltung.

In der Leistungselektronik nehmen bei der Übertragung von Energie eine zentrale Rolle ein. Ebenso ist in vielen Bereichen der Industrie die technologische Entwicklung mit der Verfügbarkeit von effizienten und leistungsstarken Umrichtern, insbesondere zur Speisung von Motoren, verbunden.

Durch eine Pulsweitenmodulation (PWM) kann in einem Umrichter eine näherungsweise sinusförmige Wechselspannung zur Ausgabe erzeugt werden, welche in vielen industriellen Anwendungen angefordert wird. Hierfür kann beispielsweise das auszugebende Sinussignal mit einer Sample-Frequenz, welche um ein Vielfaches höher ist als die Frequenz des Signals, effektiv digitalisiert werden. Eine im Umrichter zwischengespeicherte elektrische Energie kann dann über einzelne Schalter, welche oftmals als Halbleiterschalter, z.B. IGBTs oder MOSFETs, realisiert sind, derart ausgegeben werden, dass die einzelnen Schalt- bzw. Totzeiten das digitalisierte Sampling des zu modulierenden Signals nachbilden. Auf einen trägen Verbraucher wirkt der PWM-Spannungsverlauf wie eine Sinusspannung.

Bei den Schaltvorgängen im Umrichter treten an dessen Ausgang durch die plötzlichen Spannungsanstiege erhebliche Stromimpulse auf. Diese stellen eine erhöhte Beanspruchung der Isolation in angeschlossenen Komponenten, wie z.B. einem Motor, einer Drossel oder einem Kabel, dar. Des Weiteren verursachen die steilen Spannungsanstiege der Schaltvorgänge auch Störungen hinsichtlich der elektromagnetischen Verträglichkeit (EMV), weswegen viele Umrichter, welche auf einen hohen Leistungsfluss ausgelegt sind, nur in der Industrieumgebung eingesetzt werden können.

Bei den Motoren, Drosseln und Kabeln, welche für die Anwendung mit einem Umrichter vorgesehen sind, wird die Isolation meist mit einer Reserve ausgelegt, damit die steilen Spannungsvorgänge und mögliche dadurch resultierende Wanderwellen keine Schädigung von angeschlossenen Komponenten verursachen können. Weiter kann an einem Umrichterausgang auch ein entsprechender Filter, beispielsweise ein Sinus-Filter oder ein du/dt-Filter, vor die entsprechende Anwendung zwischengeschaltet werden. Eine großzügige Bemessung der Isolation ist jedoch ebenso wie der Einsatz von Filterkomponenten mit erhöhten Materialkosten verbunden.

In einem Multizellen-Umrichter wird die Erzeugung einer auszugebenden Spannung auf verschiedene Zellen aufgeteilt, wodurch günstigerweise die jeweiligen Spannungen in den einzelnen Zellen verringert werden können. Dies reduziert auch die Beanspruchung der Isolation angeschlossener Komponenten im Betriebszustand, da bei Schaltvorgängen eine geringere Spannung überbrückt wird, und ein durch einen steilen Spannungsanstieg erzeugter Stromimpuls damit schwächer ausfällt. Vor allem etwaige Filterkomponenten können somit kostengünstiger dimensioniert werden. Durch die infolge der Zellenanzahl erhöhte Anzahl von spannungssteilen Schaltvorgängen bleiben jedoch die Probleme hinsichtlich der EMV weiter bestehen, weswegen eine Vielzahl hochleistungsfähiger Umrichtertopologien nicht zum Einsatz im außerindustriellen Umfeld, beispielsweise in der Personenbeförderung, geeignet ist. Das Dokument"Current source modular multilevel converter for HVDC and FACTS"(IEEE 2013) offenbart solche Multi-Zellen-Konverter-Architekturen.

Es ist Aufgabe der Erfindung, eine Stromrichterschaltung anzugeben, welche unter vertretbarem Materialaufwand auch bei hohen Spannungen eine gute EMV bietet. Es ist weiter Aufgabe der Erfindung, eine Steuerung für eine derartige Stromrichterschaltung anzugeben.

Die erstgenannte Aufgabe wird erfindungsgemäß gelöst durch eine Multizellen-Stromrichterschaltung, welche eine Anzahl an Phasensträngen aufweist, wobei der oder jeder Phasenstrang eine Reihenschaltung einer Mehrzahl von Zellen aufweist, wobei jede Zelle der Reihenschaltung eine erste Klemme und eine zweite Klemme aufweist, wobei in der Reihenschaltung die jeweils zweite Klemme einer Zelle mit der jeweils ersten Klemme einer in Reihe nachfolgenden Zelle verbunden ist, wobei jede Zelle einen mindestens eine Kapazität und mindestens eine Induktivität umfassenden Resonanzkreis aufweist, wobei jede Zelle eine Anzahl von Schaltern aufweist, mittels derer der Resonanzkreis durch Schalten mit der ersten Klemme verbindbar ist, und/oder wobei jede Zelle eine weitere Anzahl von Schaltern aufweist, mittels derer der Resonanzkreis durch Schalten mit der zweiten Klemme verbindbar ist.

Unter einer Verbindung ist hierbei und auch im Folgenden eine elektrisch leitende Verbindung zu verstehen. Unter einem Resonanzkreis ist eine Schaltungsanordnung zu verstehen, welche die mindestens eine Kapazität und die mindestens eine Induktivität umfasst, und bei Zufuhr einer Spannung oder eines Stromes zu einer elektromagnetischen Eigenschwingung angeregt wird, wobei sich nach Abklingen der Anregung durch die Spannung oder den Strom eine charakteristische Resonanzfrequenz in der Eigenschwingung einstellt, welche durch die mindestens eine Kapazität und die mindestens eine Induktivität genau bestimmt ist.

Der Erfindung liegt hierbei die Überlegung zugrunde, dass bei einem Schaltvorgang in einem Halbleiterschalter eines Umrichters ein steiler Spannungsanstieg das zentrale Problem hinsichtlich der EMV und auch hinsichtlich der Belastung von an den Ausgang der Stromrichterschaltung angeschlossener Komponenten darstellt. Um somit eine Wechselspannung mit einem bestimmten Scheitelwert zu erzeugen, ist eine gebräuchliche Methode, die Erzeugung auf einzelne, in Reihe geschaltete Zellen aufzuteilen, so dass sich die insgesamt erzeugte Wechselspannung im Wesentlichen aus der Summe der in den Zellen erzeugten Einzelspannungen ergibt. Dies kann die Spannungsbelastung an einzelnen Halbleiterschaltern zwar reduzieren, da nun in jeder einzelnen Zelle eine potentiell niedrigere Spannung generiert wird, die Schaltvorgänge selbst bleiben jedoch noch spannungssteil und somit aus EMV-Sicht problematisch.

Die zentrale Idee ist nun, dass ein oben beschriebener Resonanzkreis in einer Mehrzahl von Zellen in diesen die Möglichkeit bietet, nahezu verlustfrei zu schalten. In einem derartigen Resonanzkreis oszilliert je nach Topologie des Resonanzkreises eine sinusartige Spannung oder ein sinusartiger Strom mit einer charakteristischen Resonanzfrequenz, wobei durch topologische Maßnahmen die Oszillationen so eingestellt werden können, dass die Spannung bzw. der Strom periodische Nulldurchgänge aufweist oder periodisch Werte annimmt, welche für den Betrieb der Stromrichterschaltung vernachlässigbar gering sind. Unter sinusartig ist hierbei zu verstehen, dass harmonische Oberschwingungen, welche Abweichungen von einer Sinusform darstellen, für den Betrieb der Stromrichterschaltung keinen nennenswerten Beitrag liefern oder deutlich höherfrequent als die Schaltfrequenzen sind. Erfolgt ein Schaltvorgang bei einem Nulldurchgang bzw. bei einem vernachlässigbar geringen Wert der Spannung oder des Stromes im Resonanzkreis, ist die Spannungs- bzw. Stromänderung am Ausgang einer Zelle des Umrichters durch den Schaltvorgang maximal so steil wie die Steigungskurve der Resonanz in der Zelle. Es entsteht somit keine Überlastung von an der Stromrichterschaltung angeschlossenen Komponenten durch Spannungsspitzen oder Wanderwellen.

Die Erfindung profitiert dabei entscheidend von der Erkenntnis, dass ein erhöhter Bauteilaufwand für die Resonanzkreise in den Zellen und damit verbundene Mehrkosten durch den Wegfall von externen Filtern und Drosseln überkompensiert wird. Überdies kann die harmonische Qualität der auszugebenden Wechselspannung bzw. des Wechselstromes erheblich verbessert werden, was eine Reihe neuer Anwendungsmöglichkeiten eröffnet. Zudem ist die technologische Entwicklung bei der Ansteuerung von pulsweitenmodulierten Stromrichterschaltungen bereits so weit fortgeschritten, dass die Synchronisation verschiedener Resonanzkreis-Zellen keinen zwingenden Hinderungsgrund für eine derartige Reihenschaltung mehr darstellt.

Bevorzugt weist die Stromrichterschaltung einen ersten Eingangskontakt und einen zweiten Eingangskontakt auf, wobei die Stromrichterschaltung am ersten Eingangskontakt an den positiven Pol einer Gleichspannungsquelle und am zweiten Eingangskontakt an den negativen Pol einer Gleichspannungsquelle anschließbar ist, wobei zwischen dem ersten Eingangskontakt und dem zweiten Eingangskontakt wenigstens einer der Phasenstränge geschaltet ist, wobei an dem oder jedem Phasenstrang mindestens zwischen einem Paar von Zellen eine Phasenspannung abgegriffen wird, und wobei in jedem Phasenstrang die erste Klemme der ersten Zelle der Reihenschaltung mit dem ersten Eingangskontakt verbunden ist, und die zweite Klemme der letzten Zelle der Reihenschaltung mit dem zweiten Eingangskontakt verbunden ist.

Gerade für eine derartige modulare Topologie mit ihrer hohen Anzahl von Schaltvorgängen ist der Einsatz von Resonanzkreisen in den Zellen zur Verringerung der Schaltverluste und damit zur Steigerung der Effizienz von Vorteil.

Unter dem Abgreifen einer Phasenspannung zwischen zwei Zellen ist hierbei zu verstehen, dass an der leitenden Verbindung zwischen den entsprechenden Klemmen der beiden Zellen ein Kontaktpunkt angebracht ist, an dem ein weiterer Leiter verbunden ist, der die Phasenspannung führt.

Insbesondere wird hierbei je Phasenstrang zwischen genau einem Paar von Zellen eine Phasenspannung abgegriffen. Hierbei kann in dem oder jedem Phasenstrang eine gerade Anzahl 2*N* von topologisch baugleichen Zellen, in Reihe geschaltet sein, wobei die Phasenspannung zwischen der *N*-ten Zelle und der *N*+1-ten Zelle abgegriffen wird. Die Werte der Kapazitäten und der Induktivitäten in den einzelnen Zellen, welche die jeweilige Resonanzfrequenz festlegen, können hierbei verschieden oder auch bis auf Toleranzen identisch sein.

Alternativ ist in der Stromrichterschaltung eine Mehrzahl von Phasensträngen in einer Sternschaltung miteinander verbunden, wobei in jedem Phasenstrang die erste Klemme der ersten Zelle der Reihenschaltung mit dem Sternpunkt verbunden ist, und an der zweiten Klemme der letzten Zelle der Reihenschaltung eine Phasenspannung abgegriffen wird, und wobei eine Anzahl von Zellen jeweils eine Anzahl von Versorgungsklemmen aufweist, die jeweils mit einer Spannungsquelle verbindbar sind.

In dieser Multizellen-Topologie wird zur Erzeugung einer Wechselspannung oder eines Wechselstromes in Zellen mit einer externen Spannungsversorgung eine hohe Anzahl von Schaltvorgängen durchgeführt. Somit ist der Einsatz von Resonanzkreisen in den Zellen zur Verringerung der Schaltverluste und damit zur Steigerung der Effizienz von Vorteil.

Bevorzugt weist hierbei eine Mehrzahl von Zellen jeweils drei Versorgungsklemmen und drei zueinander parallel geschaltete Halbbrücken auf, wobei jede Versorgungsklemme mit einer Phase einer dreiphasigen Wechselspannungsquelle verbindbar ist, und wobei jede Versorgungsklemme mit dem Mittelpunkt einer Halbbrücke verbunden ist. Die Halbbrücken in einer Zelle ermöglichen eine steuerungstechnisch einfache Einspeisung der zugeführten Wechselspannung in den Resonanzkreis der jeweiligen Zelle. Eine Auslegung der Zellen auf eine dreiphasige Spannungsversorgung erlaubt es, für den Betrieb auf weit verbreitete Spannungsquellen zurückgreifen zu können, wie sie z.B. durch ein dreiphasiges Wechselspannungsnetz oder einen Drehstromtransformator gegeben sein kann.

Günstigerweise weist die Stromrichterschaltung drei Phasenstränge auf. Dies ermöglicht es, eine dreiphasige Wechselspannung bzw. einen dreiphasigen Wechselstrom zu generieren, wofür eine Vielzahl von möglichen Verbrauchern ausgelegt ist.

Als zweckmäßig erweist es sich, wenn in einer Anzahl von Zellen eine erste Halbbrücke und eine zweite Halbbrücke parallel geschaltet sind, wobei die erste Klemme mit dem Mittelpunkt der ersten Halbbrücke und die zweite Klemme mit dem Mittelpunkt der zweiten Halbbrücke verbunden ist. Auf diese Art ist eine Ausgabe einer Wechselspannung oder eines Wechselstromes mittels Pulsweitenmodulation der Schalter der Halbbrücken steuerungstechnisch besonders einfach zu bewerkstelligen.

In einer vorteilhaften Ausgestaltung der Stromrichterschaltung ist in einer Anzahl von Zellen, welche zwei zueinander parallele Halbbrücken aufweisen, der jeweilige Resonanzkreis parallel zu den Halbbrücken der Zelle geschaltet. Insbesondere kann hierbei der Resonanzkreis durch eine parallel zu den Halbbrücken geschaltete Kapazität und eine parallel zu den Halbbrücken (und zur Kapazität) geschaltete Induktivität gebildet sein. Am Mittelpunkt einer der beiden Halbbrücken kann jeweils die erste bzw. die zweite Klemme der jeweiligen Zelle verbunden sein. Diese Topologie wird auch als "Parallel Resonant AC Voltage Link" bezeichnet. In einem solchen Fall schwingt im Resonanzkreis eine sinusartige Wechselspannung mit der durch die Kapazität und die Induktivität bestimmten Eigenfrequenz. Diese Wechselspannung im Resonanzkreis weist periodische Spannungsnulldurchgänge auf, welche die Möglichkeit bieten, Schaltvorgänge zur Pulsweitenmodulation einer über die erste und/oder die zweite Klemme auszugebenden Wechselspannung spannungsarm durchzuführen.

In einer weiter vorteilhaften Ausgestaltung ist in einer Anzahl von Zellen, welche zwei zueinander parallele Halbbrücken aufweisen, der jeweilige Resonanzkreis mit den Verbindungspunkten der Parallelschaltung zweier Halbbrücken in Reihe geschaltet. Unter den Verbindungspunkten der Parallelschaltung zweier Halbbrücken sind hierbei die Kontakte der beiden Halbbrücken an genau einem der diese parallel miteinander verbindenden Leiter zu verstehen. Insbesondere kann hierbei der Resonanzkreis durch eine in Reihe zu den Verbindungspunkten geschaltete Kapazität und eine hierzu in Reihe geschaltete Induktivität gebildet sein. Diese Topologie wird auch als "Series Resonant AC Current Link" bezeichnet. In einem solchen Fall schwingt im Resonanzkreis ein sinusartiger Wechselstrom mit der durch die Kapazität und die Induktivität bestimmten Eigenfrequenz. Die periodischen Nulldurchgänge des Wechselstroms im Resonanzkreis bieten die Möglichkeit, Schaltvorgänge zur Pulsweitenmodulation eines über die erste und/oder die zweite Klemme auszugebenden Wechselstromes stromarm durchzuführen.

Es kann sich als zweckmäßig erweisen, wenn in einer Anzahl von Zellen, welche zwei zueinander parallele Halbbrücken aufweisen, der Resonanzkreis als ein Gleichspannungskreis oder als ein Gleichstromkreis ausgebildet ist. Ein Gleichspannungs-Resonanzkreis kann hierbei insbesondere durch zwei Kapazitäten, welche parallel zueinander und parallel zu den Halbbrücken geschaltet sind, sowie eine Induktivität, welche in eine leitenden Verbindung zwischen die beiden Kapazitäten geschaltet ist, gebildet werden. Eine solche Topologie wird als "Parallel Resonant DC Voltage Link" bezeichnet. Ein Gleichstrom-Resonanzkreis kann hierbei insbesondere durch eine Kapazität, welche mit den Verbindungspunkten der Parallelschaltung zweier Halbbrücken in Reihe geschaltet ist, sowie eine zur Kapazität in Reihe geschaltete und eine weitere zur Kapazität parallel geschaltete Induktivität gebildet sein. Diese Topologie wird auch als "Series Resonant DC Current Link" bezeichnet.

In einem Gleichspannungs-Resonanzkreis oszilliert eine sinusartige Gleichspannung mit der durch die Kapazität und die Induktivität bestimmten Eigenfrequenz zwischen einer Maximalspannung und einer im Wesentlichen Null betragenden Spannung. Zeitabschnitte, für welche die Wechselspannung im Resonanzkreis nahezu Null beträgt, bieten die Möglichkeit, Schaltvorgänge zur Pulsweitenmodulation einer über die erste und/oder die zweite Klemme auszugebenden Wechselspannung spannungsarm durchzuführen. Für einen Gleichstrom-Resonanzkreis gilt Vergleichbares.

Die zweitgenannte Aufgabe wird erfindungsgemäß gelöst durch ein Verfahren zur Steuerung einer Stromrichterschaltung mit den vorbeschriebenen Merkmalen, wobei in einer Anzahl von Zellen ein Ausgangssignal an die erste Klemme und/oder die zweite Klemme abgegeben wird, wobei das Ausgangssignal als ein Wechselstrom oder als eine Wechselspannung auf Basis einer Resonanzfrequenz des jeweiligen Resonanzkreises pulsweitenmoduliert wird, und wobei die Schaltvorgänge der Pulsweitenmodulation im Wesentlichen bei einem Nulldurchgang der Spannung oder des Stromes im Resonanzkreis stattfinden.

Die für die Stromrichterschaltung und seine Weiterbildung genannten Vorteile können dabei sinngemäß auf das Verfahren übertragen werden.

"Im Wesentlichen" ist hierbei so zu verstehen, dass ein Großteil der Schaltvorgänge, welche der Modulation des auszugebenden Signals dienen, bei einem Nulldurchgang der Spannung oder des Stromes im Resonanzkreis stattfinden soll. Insbesondere kann hierbei ein Schaltvorgang während eines solchen Nulldurchganges stattfinden, oder erfolgen, wenn der Absolutbetrag der Spannung oder des Stromes im Resonanzkreis weniger als einen Bruchteil seines über viele Resonanzperioden gemittelten Maximalwertes beträgt, insbesondere weniger als 10% dieses gemittelten Maximalwertes, und insbesondere weniger als 5% dieses gemittelten Maximalwertes.

Bevorzugt wird eine Mehrzahl von Zellen mit der gleichen Resonanzfrequenz betrieben. Dies erlaubt aufgrund der Synchronisation eine besonders einfache Ansteuerung der einzelnen Schalter der jeweiligen Zellen.

Als vorteilhaft erweist es sich hierbei, wenn eine Anzahl von Zellen gegenüber einer weiteren Anzahl von Zellen mit gleicher Resonanzfrequenz phasenverschoben betrieben wird. Die zeitliche Synchronisation zwischen einzelnen Zellen bleibt somit erhalten, somit genügt für die betreffenden Zellen eine gemeinsame Zeitreferenz in der Steuerung. Durch die Phasenverschiebung einzelner Zellen gegeneinander lässt sich jedoch ein sinusförmiges Ausgangssignal besser nachbilden. Bereits am Ausgang des Umrichters hat die ausgegebene Wechselspannung eine Wellenform, welche der Wellenform, welche in einem relativ träge auf Spannungsänderungen reagierenden Verbraucher registriert wird, bereits sehr nahe kommt. Dadurch, dass im Verbraucher weniger Oberschwingungen gefiltert werden, werden dessen Komponenten weniger belastet.

Günstigerweise wird eine Mehrzahl von Zellen jeweils mit unterschiedlicher Resonanzfrequenz betrieben. Dies erlaubt es, die Wellenform der Wechselspannung am Ausgang des Umrichters möglichst exakt einstellen zu können, und mögliche unerwünschte Oberschwingungen erst gar nicht an einen Verbraucher weiterzugeben.

Nachfolgend wird ein Ausführungsbeispiel der Erfindung anhand einer Zeichnung näher erläutert. Hierbei zeigen:
- FIG 1: in einer schematischen Darstellung ein vereinfachtes Schaltbild einer Multizellen-Stromrichterschaltung mit drei parallelen Phasensträngen sowie ein Detailschaltbild einer einzelnen Zelle,
- FIG 2: in einer schematischen Darstellung ein vereinfachtes Schaltbild einer Multizellen-Stromrichterschaltung mit drei Phasensträngen in Sternschaltung sowie ein Detailschaltbild einer einzelnen Zelle mit externer Spannungsversorgung, und
- FIG 3: ein Detailschaltbild einer alternativen Topologie einer Zelle der Stromrichterschaltung nach FIG 2.

Einander entsprechende Teile und Größen sind in allen Figuren jeweils mit gleichen Bezugszeichen versehen.

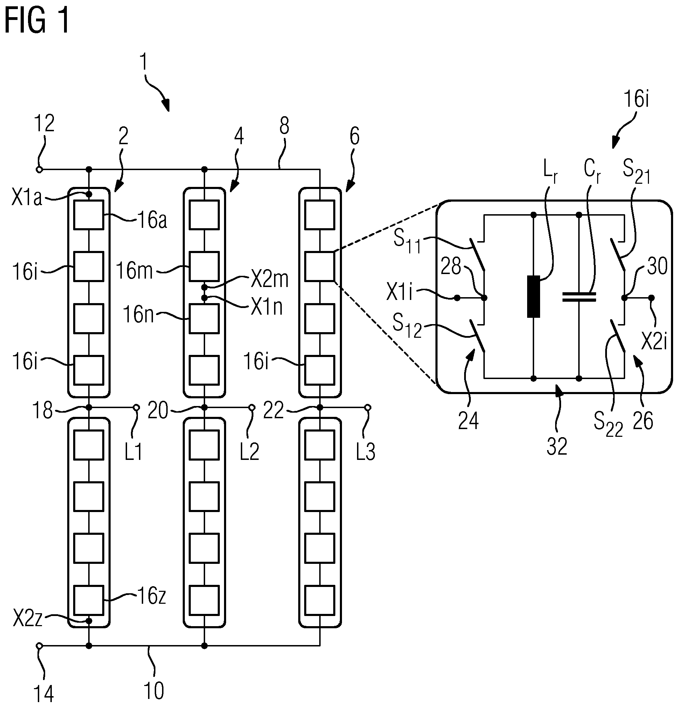

In FIG 1 ist in einer schematischen Darstellung ein vereinfachtes Schaltbild einer Stromrichterschaltung 1 gezeigt. Die Stromrichterschaltung 1 weist drei Phasenstränge 2, 4, 6 auf, welche zwischen den beiden Verbindungsleitern 8, 10 parallel geschaltet sind. Der Verbindungsleiter 8 führt zum ersten Eingangskontakt 12, der Verbindungsleiter 10 führt zum zweiten Eingangskontakt 14. Der erste Eingangskontakt 12 und der zweite Eingangskontakt 14 sind im Betrieb der Stromrichterschaltung 1 an den positiven bzw. negativen Pol einer in der Zeichnung nicht näher dargestellten Gleichspannungsquelle angeschlossen.

Jeder der Phasenstränge 2, 4, 6 weist im Ausführungsbeispiel acht in Reihe geschaltete Zellen 16i auf. An der Verbindung zwischen der jeweils vierten und fünften Zelle eines Phasenstranges 2, 4, 6 werden an den Kontaktpunkten 18, 20, 22 die jeweiligen Phasenspannungen L1 bzw. L2 bzw. L3 abgegriffen.

Jede der Zellen 16i weist eine erste Klemme X1i und eine zweite Klemme X2i auf, wobei in der jeweiligen Reihenschaltung die zweite Klemme X2m einer Zelle 16m mit der ersten Klemme X1n einer in Reihe nachfolgenden Zelle 16n verbunden ist. Die erste Klemme X1a der ersten Zelle 16a eines jeden Phasenstranges 2, 4, 6 ist mit dem Verbindungsleiter 8 verbunden, welcher zum Eingangskontakt 12 führt. Die zweite Klemme X2z der letzten Zelle 16z eines jeden Phasenstranges 2, 4, 6 ist mit dem Verbindungsleiter 10 verbunden, welcher zum Eingangskontakt 14 führt.

In jeder Zelle 16i sind zwei Halbbrücken 24, 26 angeordnet. Die erste Halbbrücke 24 umfasst die beiden Schalter S11 und S12, wobei der Mittelpunkt 28 der ersten Halbbrücke 24 mit der ersten Klemme X1 verbunden ist. Die zweite Halbbrücke 26 umfasst die beiden Schalter S21 und S22, wobei der Mittelpunkt 30 der zweiten Halbbrücke 26 mit der zweiten Klemme X2i verbunden ist. Parallel zu den beiden Halbbrücken 24, 26 ist ein Resonanzkreis 32 geschaltet, welcher durch eine Kapazität Cr und eine hierzu parallele Induktivität Lr gebildet wird.

Im Betrieb der Stromrichterschaltung 1 oszilliert im Resonanzkreis 32 einer jeden Zelle 16i eine Wechselspannung, so dass die Schalter S11, S12, S21, S22 der Zelle 16i bei Spannungsnulldurchgängen im Resonanzkreis geschaltet werden können. Hierdurch ist der maximale Spannungsanstieg bei jedem Schaltvorgang durch den Spannungsanstieg der Wechselspannung im Resonanzkreis begrenzt.

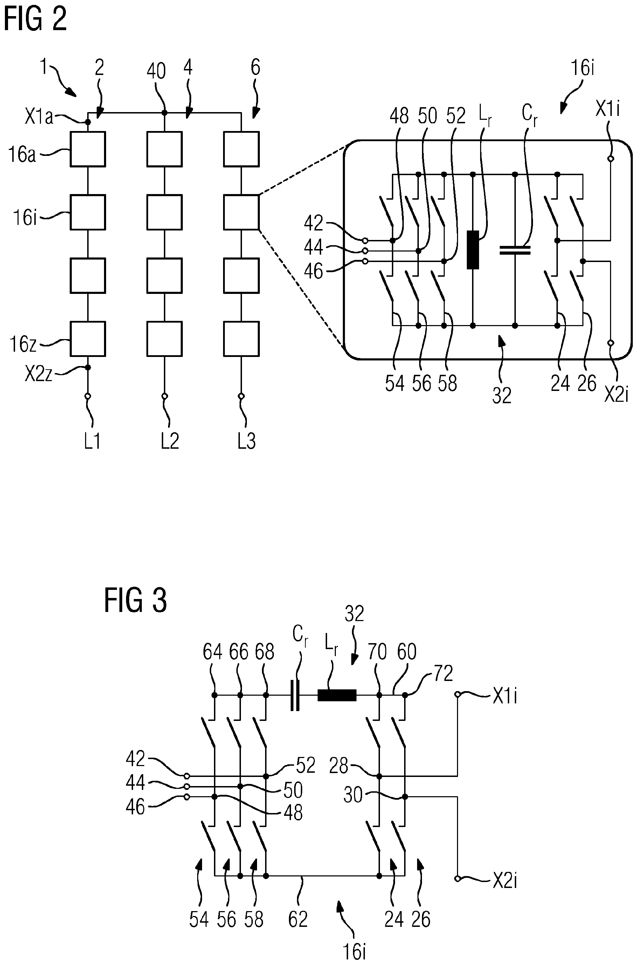

In FIG 2 ist in einer schematischen Darstellung ein vereinfachtes Schaltbild einer Stromrichterschaltung 1 gezeigt. Die Stromrichterschaltung 1 weist drei Phasenstränge 2, 4, 6 auf, welche an einem Sternpunkt 40 miteinander verbunden sind. Jeder Phasenstrang 2, 4, 6 umfasst vier Zellen 16i, welche analog zu FIG 1 in Reihe geschaltet sind. Die erste Klemme X1a der ersten Zelle 16a eines jeden Phasenstranges 2, 4, 6 ist mit dem Sternpunkt 40 verbunden, an der letzten Klemme X2z der letzten Zelle16z eines jeden Phasenstranges 2, 4, 6 wird eine Phasenspannung L1, L2, L3 abgegriffen.

Jede der Zellen 16i weist drei Versorgungsklemmen 42, 44, 46 auf, von denen jede einzelne mit jeweils einem Mittelpunkt 48, 50, 52 einer der Halbbrücken 54, 56, 58 verbunden ist. Im Betrieb der Stromrichterschaltung 1 sind die Versorgungsklemmen 42, 44, 46 an eine dreiphasige Wechselspannungsquelle angeschlossen, welche in der Zeichnung nicht näher dargestellt ist. Die Halbbrücken 54, 56, 58 sind parallel zum Resonanzkreis 32, welcher durch die Kapazität Cr und die hierzu parallele Induktivität Lr gebildet wird, und parallel zu den mit der ersten Klemme X1i bzw. der zweiten Klemme X2i verbundenen Halbbrücken 24, 26 geschaltet.

In FIG 3 ist ein Schaltbild einer alternativen Möglichkeit der topologischen Ausgestaltung einer einzelnen Zelle 16i der in FIG 2 gezeigten Stromrichterschaltung dargestellt. Die Zelle 16i weist drei Versorgungsklemmen 42, 44, 46 auf, von denen jede einzelne mit jeweils einem Mittelpunkt 48, 50, 52 einer der Halbbrücken 54, 56, 58 verbunden ist. Der Mittelpunkt 28 der Halbbrücke 24 ist mit der ersten Klemme X1i, der Mittelpunkt 30 der Halbbrücke 26 mit der zweiten Klemme X2i verbunden.

Der Resonanzkreis 32, welcher die Kapazität Cr und die hierzu in Reihe geschaltete Induktivität Lr gebildet wird, ist auf in Reihe geschaltet mit dem Leiter 60. Parallel zum Leiter 60 verläuft der Leiter 62. Zwischen dem Leiter 60 und dem Leiter 62 sind die Halbbrücken 24, 26, 54, 56, 58 parallel zueinander verschaltet, so dass die die Verbindungspunkte 64, 66, 68, 70, 72 der Halbbrücken 24, 26, 54, 56, 58 und der Resonanzkreis in Reihe geschaltet sind. Diese Topologie wird auch als "Series Resonant AC Current Link" bezeichnet. Im Gegensatz zu in FIG 1 oder FIG 2 dargestellten Topologie der Zelle 16i oszilliert im Resonanzkreis 32 ein Wechselstrom, so dass die Schalter der Halbbrücken 24, 26, 54, 56, 58 bei Stromnulldurchgängen im Resonanzkreis geschaltet werden können.

## Patentansprüche

1. Multizellen-Stromrichterschaltung (1), welche eine Mehrzahl von Phasensträngen (2,4,6) in einer Sternschaltung aufweist, wobei jeder Phasenstrang (2,4,6) eine Reihenschaltung einer Mehrzahl von Zellen (16) aufweist, wobei jede Zelle (16a-16z) der Reihenschaltung eine erste Klemme (X1a-X1z) und eine zweite Klemme (X2a-X2z) aufweist, wobei in der Reihenschaltung die jeweils zweite Klemme (X2m) einer Zelle (16m) mit der jeweils ersten Klemme (X1n) einer in Reihe nachfolgenden Zelle (16n) verbunden ist, wobei in jedem Phasenstrang (2, 4, 6)
- die erste Klemme (X1a) der ersten Zelle (16a) der Reihenschaltung mit dem Sternpunkt (40) verbunden ist, und
- an der zweiten Klemme (X2z) der letzten Zelle (16z) der Reihenschaltung eine Phasenspannung (L1,L2,L3) abgegriffen wird,
wobei jede Zelle (16a-16z) einen mindestens eine Kapazität (Cr) und mindestens eine Induktivität (Lr) umfassenden Resonanzkreis (32) aufweist, wobei jede Zelle (16) eine Anzahl von Schaltern (S11,S12) aufweist, mittels derer der Resonanzkreis (32) durch Schalten mit der ersten Klemme (X1a-X1z) verbindbar ist, und/oder wobei jede Zelle (16) eine weitere Anzahl von Schaltern (S21,S22) aufweist, mittels derer der Resonanzkreis (32) durch Schalten mit der zweiten Klemme (X2a-X2z) verbindbar ist, und wobei eine Mehrzahl von Zellen (16a-16z) jeweils drei Versorgungsklemmen (42,44,46) und drei zueinander parallel geschaltete Halbbrücken (54,56,58) aufweist, wobei jede Versorgungsklemme (42,44,46) mit einer Phase einer dreiphasigen Wechselspannungsquelle verbindbar ist, und wobei jede Versorgungsklemme (42,44,46) mit dem Mittelpunkt (48,50,52) einer Halbbrücke (54,56,58) verbunden ist.

2. Stromrichterschaltung (1) nach Anspruch 1, wobei die Zahl der Phasenstränge (2,4,6) drei beträgt.

3. Stromrichterschaltung (1) nach einem der vorhergehenden Ansprüche, wobei in einer Anzahl von Zellen (16a-16z) eine erste Halbbrücke (24) und eine zweite Halbbrücke (26) parallel geschaltet sind, wobei die erste Klemme (X1a-X1z) mit dem Mittelpunkt (28) der ersten Halbbrücke (24) und die zweite Klemme (X2a-X2z) mit dem Mittelpunkt (30) der zweiten Halbbrücke (26) verbunden ist.

4. Stromrichterschaltung (1) nach einem der Ansprüche 1 bis 3, wobei in einer Anzahl von Zellen (16), welche zwei zueinander parallele Halbbrücken (24,26,54,56,58) aufweisen, der jeweilige Resonanzkreis (32) parallel zu den Halbbrücken (24,26,54,56,58) der Zelle (16a-16z) geschaltet ist.

5. Stromrichterschaltung (1) nach einem der Ansprüche 1 bis 3, wobei in einer Anzahl von Zellen (16a-16z), welche zwei zueinander parallele Halbbrücken (24,26,54,56,58) aufweisen, der jeweilige Resonanzkreis (32) mit den Verbindungspunkten (64,66,68,70,72) der Parallelschaltung zweier Halbbrücken (24,26,54,56,58) in Reihe geschaltet ist.

6. Stromrichterschaltung (1) nach einem der Ansprüche 1 bis 5, wobei in einer Anzahl von Zellen (16a-16z), welche zwei zueinander parallele Halbbrücken (24,26) aufweisen, der Resonanzkreis (32) als ein Gleichspannungskreis oder als ein Gleichstromkreis ausgebildet ist.

7. Verfahren zur Steuerung einer Stromrichterschaltung (1) mit den Merkmalen nach einem der vorhergehenden Ansprüche, wobei in einer Anzahl von Zellen (16a-16z) ein Ausgangssignal an die erste Klemme (X1a-X1z) und/oder die zweite Klemme (X2a-X2z) abgegeben wird, wobei das Ausgangssignal als ein Wechselstrom oder als eine Wechselspannung auf Basis einer Resonanzfrequenz des jeweiligen Resonanzkreises (32) pulsweitenmoduliert wird, und wobei die Schaltvorgänge der Pulsweitenmodulation im Wesentlichen bei einem Nulldurchgang der Spannung oder des Stromes im Resonanzkreis stattfinden,
wobei eine Mehrzahl von Zellen (16a-16z) mit der gleichen Resonanzfrequenz betrieben wird,
wobei eine Anzahl von Zellen (16a-16z) gegenüber einer weiteren Anzahl von Zellen (16a-16z) mit gleicher Resonanzfrequenz phasenverschoben betrieben wird.

8. Verfahren nach Anspruch 7, wobei eine Mehrzahl von Zellen (16a-16z) jeweils mit unterschiedlicher Resonanzfrequenz betrieben wird.

## Claims

1. Multi-cell power converter circuit (1) which has a plurality of phase strings (2,4,6) in a star connection, wherein each phase string (2,4,6) has a series connection of a plurality of cells (16), wherein each cell (16a-16z) of the series connection has a first terminal (X1a-X1z) and a second terminal (X2a-X2z), wherein in the series connection the respective second terminal (X2m) of a cell (16m) is connected to the respective first terminal (X1n) of a cell (16n) downstream in series, wherein in each phase string (2,4,6)
- the first terminal (X1a) of the first cell (16a) of the series connection is connected to the star point (40), and
- a phase voltage (L1,L2,L2) is picked off at the second terminal (X2z) of the last cell (16z) of the series connection,
wherein each cell (16a-16z) has a resonant circuit (32) comprising at least one capacitance (Cr) and at least one inductance (Lr), wherein each cell (16) has a number of switches (S11, S12), by means of which the resonant circuit (32) can be connected to the first terminal (X1a-X1z) by switching, and/or wherein each cell (16) has a further number of switches (S21,S22), by means of which the resonant circuit (32) can be connected to the second terminal (X2a-X2z) by switching, and wherein a plurality of cells (16a-16z) each has three supply terminals (42,44,46) and three half-bridges (54,56,58) connected in parallel to one another, wherein each supply terminal (42,44,46) can be connected to one phase of a three-phase AC voltage source, and wherein each supply terminal (42,44,46) is connected to the midpoint (48,50,52) of a half-bridge (54,56,58).

2. Power converter circuit (1) according to claim 1, wherein the number of phase strings (2,4,6) is three.

3. Power converter circuit (1) according to one of the preceding claims, wherein in a number of cells (16a-16z) a first half-bridge (24) and a second half-bridge (26) are connected in parallel, wherein the first terminal (X1a-X1z) is connected to the midpoint (28) of the first half-bridge (24) and the second terminal (X2a-X2z) is connected to the midpoint (30) of the second half-bridge (26).

4. Power converter circuit (1) according to one of claims 1 to 3, wherein in a number of cells (16) which have two half-bridges (24,26,54,56,58) parallel to one another the respective resonant circuit (32) is switched in parallel to the half-bridges (24,26,54,56,58) of the cell (16a-16z).

5. Power converter circuit (1) according to one of claims 1 to 3, wherein in a number of cells (16a-16z) which have two half-bridges (24,26,54,56,58) parallel to one another, the respective resonant circuit (32) having the connection points (64,66,68,70,72) of the parallel circuit of two half-bridges (24,26,54,56,58) is connected in series.

6. Power converter circuit (1) according to one of claims 1 to 5, wherein in a number of cells (16a-16z) which have two half-bridges (24, 26) parallel to one another, the resonant circuit (32) is formed as a DC voltage circuit or a DC current circuit.

7. Method for controlling a power converter circuit (1) having the features according to one of the preceding claims, wherein in a number of cells (16a-16z) an output signal is emitted to the first terminal (X1a-X1z) and/or the second terminal (X2aX2z), wherein the output signal is pulse-width modulated as an AC current or as an AC voltage based on a resonant frequency of the respective resonant circuit (32), and wherein the switching operations of the pulse-width modulation occur substantially at a zero crossing of the voltage or of the current in the resonant circuit, wherein a plurality of cells (16a-16z) is operated at the same resonant frequency, wherein a number of cells (16a-16z) are operated out of phase with a further number of cells (16a-16z) with the same resonant frequency.

8. Method according to claim 7, wherein a plurality of cells (16a-16z) is each operated with a different resonant frequency.

## Revendications

1. Circuit (1) redresseur de courant à plusieurs cellules, qui a une pluralité de conducteurs (2, 4, 6) de phase suivant un montage en étoile, chaque conducteur (2, 4, 6) de phase ayant un montage en série d'une pluralité de cellules (16), chaque cellule (16a-16z) du montage en série ayant une première borne (X1a-X1z) et une deuxième borne (X2a-X2z), dans lequel, dans le montage en série, la deuxième borne (X2m) d'une cellule (16m) est reliée à la première borne (X1n) d'une cellule (16n) suivante en série, dans lequel, dans chaque conducteur (2, 4, 6) de phase
- la première borne (X1a) de la première cellule (16a) du montage en série est reliée au point (40) neutre et
- une tension (L1, L2, L3) de phase est prélevée à la deuxième borne (X2z) de la dernière cellule (16z) du montage en série,
dans lequel chaque cellule (16a-16z) a un circuit (32) de résonance, comprenant au moins une capacité (Cr) et au moins une inductance (Lr), dans lequel chaque cellule (16) a un certain nombre d'interrupteurs (S11, S12), au moyen desquels le circuit (32) de résonance peut, par fermeture, être relié à la première borne (X1a-X1z) et/ou dans lequel chaque cellule (16) a un autre nombre d'interrupteurs (S21, S22), au moyen desquels le circuit (32) de résonance peut, par fermeture, être relié à la deuxième borne (X2a-X2z), et dans lequel une pluralité de cellules (16a-16z) ont chacune trois bornes (42, 44, 46) d'alimentation et trois demi-ponts (54, 56, 58) montés en parallèle les uns par rapport aux autres, chaque borne (42, 44, 46) d'alimentation pouvant être reliée à une phase d'une source de tension alternative triphasée et chaque borne (42, 44, 46) d'alimentation étant reliée au centre (48, 50, 52) de symétrie d'un demi-pont (54, 56, 58).

2. Circuit (1) redresseur de courant suivant la revendication 1, dans lequel le nombre de conducteurs (2, 4, 6) de phase est de trois.

3. Circuit (1) redresseur de courant suivant l'une des revendications précédentes, dans lequel, dans un certain nombre de cellules (16a-16z), un premier demi-pont (24) et un deuxième demi-pont (26) sont montés en parallèle, la première borne (X1a-X1z) étant reliée au centre (28) de symétrie du premier demi-pont (24) et la deuxième borne (X2a-X2z) au centre (30) de symétrie du deuxième demi-pont (26).

4. Circuit (1) redresseur de courant suivant l'une des revendications 1 à 3, dans lequel, dans un certain nombre de cellules (16), qui ont deux demi-ponts (24, 26, 54, 56, 58) montés en parallèle l'un avec l'autre, le circuit (32) de résonance respectif est monté en parallèle au demi-pont (24, 26, 54, 56, 58) de la cellule (16a-16z).

5. Circuit (1) redresseur de courant suivant l'une des revendications 1 à 3, dans lequel, dans un certain nombre de cellules (16a-16z), qui ont deux demi-ponts (24, 26, 54, 56, 58) montés en parallèle l'un avec l'autre, le circuit (32) de résonance respectif est monté en série avec les points (64, 66, 68, 70, 72) de liaison du montage en parallèle de deux demi-ponts (24, 26, 54, 56, 58).

6. Circuit (1) redresseur de courant suivant l'une des revendications 1 à 5, dans lequel, dans un certain nombre de cellules (16a-16z), qui ont deux demi-ponts (24, 26) montés en parallèle l'un avec l'autre, le circuit (t32) de résonance est constitué sous la forme d'un circuit de tension continue ou d'un circuit de courant continu.

7. Procédé de commande d'un circuit (1) redresseur de courant ayant les caractéristiques suivant l'une des revendications précédentes, dans lequel on prélève, dans un certain nombre de cellules (16a-16z), un signal de sortie à la première borne (X1a-X1z) et/ou à la deuxième borne (X2a-X2z), on module, en largeur d'impulsion, le signal de sortie sous la forme d'un courant alternatif ou sous la forme d'une tension alternative sur la base d'une fréquence de résonance du circuit (2) de résonance, et dans lequel les opérations de commutation de la modulation d'impulsion en largeur ont lieu à un passage par zéro de la tension ou du courant dans le circuit de résonance, dans lequel on fait fonctionner une pluralité de cellules (16a-16z) à la même fréquence de résonance,
dans lequel on fait fonctionner un certain nombre de cellules (16a-16z) d'une manière décalée en phase par rapport à un autre nombre de cellules (16a-16z) ayant une même fréquence de résonance.

8. Procédé suivant la revendication 7, dans lequel on fait fonctionner une pluralité de cellules (16a-16z), chacune à une fréquence de résonance différente.
